# EUROPÄISCHE PATENTSCHRIFT

(11) **EP 0 782 060 B1**
(45) Veröffentlichungstag und Bekanntmachung des Hinweises auf die Patenterteilung: **10.04.2002**
(21) Anmeldenummer: 96117147.7
(22) Anmeldetag: 25.10.1996
(51) Int. Cl.: G05D 7/06

(54) **Mikroprozessorgesteuerter Stellungsregler**
Microprocessor controlled position regulator
Régulateur de position contrôlé par microprocesseur

(30) Priorität: 27.10.1995 DE 19540441
(43) Veröffentlichungstag der Anmeldung: 02.07.1997
(73) Patentinhaber: Schubert & Salzer Control Systems GmbH, 85053 Ingolstadt (DE)
(72) Erfinder: Lange, Rainer, Dr., 86633 Neuburg (DE)
(74) Vertreter: Bergmeier, Werner, Dipl.-Ing.

(56) Entgegenhaltungen:
- EP-A- 0 670 533
- DE-A- 2 916 172
- DE-A- 3 642 642
- DE-A- 3 911 259
- DE-A- 3 931 962
- US-A- 3 552 428
- US-A- 4 934 397

## Beschreibung

Zur Steuerung von Ventilen in Anlagen werden Stellungsregler benutzt, um den Hub oder die Öffnung h des Stellventiles entsprechend einer Vorgabe zu positionieren. Diese Vorgabe besteht in der Regel in einer bestimmten gewünschten Durchflußmenge Q. Störende Störungs- und Reibungskräfte in der Strömung sollen dabei weitgehend ausgeschaltet werden. Einer bestimmten Öffnung h des Ventiles ist somit eine bestimmte Durchflußmenge Q zugeordnet. Diese Beziehung Q(h) wird üblicherweise Betriebskennlinie genannt.

Um die für eine gewünschte Durchflußmenge Q entsprechende Ventilöffnung h zu erhalten, wird eine Stellgröße w als elektrisches Stromsignal in den Stellungsregler eingespeist und mit der aktuellen Öffnungs- bzw. Hubposition h des Ventils verglichen. Je nach dem Ergebnis dieses Vergleichs wird dann dem pneumatischen Stellantrieb des Ventils eine pneumatische oder mechanische Stellkraft zugeführt, bis Stell- und Regelgröße (Soll-/Istwert) übereinstimmen.

Die gängigen Stellungsregler sind meist nach elektromechanischen Prinzipien aufgebaut. Der Hub h bzw. die öffnung des Ventils wird dabei mechanisch erfaßt, z.B. über eine Hebelanlenkung, und in den Stellungsregler zurückgeführt.

Neuere Konstruktionen ersetzen das elektromechanische System durch elektronische Komponenten, wobei auch Mikroprozessoren Anwendung finden. Die Ventilöffnung h wird dabei in eine elektrische Größe umgeformt, z.B. durch ein Potentiometer, und in geeigneter Weise, z.B. über die Prozessor-Software, mit der Führungsgröße verglichen. Diese Stellungsregler arbeiten als ein mikroprozessorgesteuertes System wie folgt:

Die Führungsgröße w wird als Strom- oder Spannungssignal vorgegeben, beispielsweise von einem Prozeßrechner oder auch Prozeßregler, der die Stellgröße w, d.h. der Signale zur Ansteuerung des Ventils über einen in der mikroprozessorgesteuerten Schaltung des Rechners gebildeten Algorithmus (Rechenverfahren) errechnet. Die Verarbeitung der Signale als Führungs- und Regelgröße erfolgt über eine mikroprozessorgesteuerte Schaltung des Stellungsreglers. Schließlich wird der erreichte Hub h festgestellt und über ein Potentiometer oder ein berührungslos arbeitendes Wegmeßsystem rückgeführt.

Bekanntlich besitzt jedes Ventil durch seine Bauweise eine bestimmte Ventilkennlinie Kᵥ(h), die sich jedoch je nach den Widerständen und Betriebszuständen der Anlage, in die das Ventil eingebaut ist, zur Betriebskennlinie Q(h) verändert. Für die Genauigkeit, Stabilität und Regelgüte des Regelkreises der Anlage, in die das Ventil als Stellglied eingesetzt ist, wäre es jedoch wünschenswert, daß gleiche Hubänderungen zu gleichen Durchflußänderungen führen. Mit anderen Worten: Die Betriebskennlinie Q(h) des Systems sollte den Durchfluß Q als eine lineare Funktion des Hubes h zeigen, und zwar für alle Betriebszustände.

Man hat schon versucht, durch Drosselorgane, d.h. mechanisches Gestalten der Ventile diese jeweils wenigstens näherungsweise an eine lineare Betriebskennlinie Q(h) heranzuführen. Dies ist jedoch äußerst aufwendig. Vor allen Dingen ist die konstruktiv einmal festgelegte Gestalt des Ventils immer nur für einen bestimmten Betriebszustand geeignet, eine lineare Betriebskennlinie zu bewirken. Bei anderen Betriebszuständen und auch in anderen Anlagen muß dieses Ventil erneut konstruktiv angepaßt werden. Im übrigen erhält man auf diese Weise nur näherungsweise ein lineares Verhalten.

Durch die DE 29 16 172 A1 ist es bekannt, auf einem Prüfstand die Ventilkennlinie eines Proportionalventiles aufzunehmen und aus dieser ventilspezifischen Kennlinie die Differenz des Istwertes des Ausgangsdruckes vom Sollwert des Ausgangsdruckes bei einer bestimmten Anzahl von Eingangssteuerspannungen zu ermitteln, zu speichern und ein Eingangssignal des Verstärkers damit zu korrigieren. Durch diese Korrekturwerte wird die Steuerspannung von vornherein festgelegt, so daß Regelungsvorrichtungen vermieden werden. Eine Messung der tatsächlichen Druckverhältnisse in der Anlage und eine entsprechende Vorgabe für den Regelkreis der Anlage erfolgt nicht.

Durch die DE 39 11 259 A1 ist es bekannt, anstelle der Ablage von digitalen Absolutwerten im Festwertspeicher Verstärkungswerte abzulegen. Es erfolgt zwar eine Korrektur der Ventilkennlinie in eine lineare Kennlinie durch die im Festwertspeicher abgelegten Werte, die Veränderung der Verstärkung des Eingangswertsignales wird dabei jedoch stufenweise vorgenommen. Eine Messung der tatsächlichen Druckverhältnisse der Anlage erfolgt nicht. Durch diese bekannte Lösung soll ein kostspieliger Regelkreis erspart werden.

Aufgabe der vorliegenden Erfindung ist es, auf einfache Weise die Regelgenauigkeit einer in eine Anlage eingebauten Regelung eines Systems zu verbessern.

Erfindungsgemäß wird diese Aufgabe dadurch gelöst, daß eine Nichtlinearität zwischen dem Stellsignal (w) und der Ventilöffnung (h) erzeugt wird, und zwar in der Weise, daß Linearität zwischen Stellsignal (w) und Durchflußmenge (Q) entsteht. Zur Steuerung eines in eine Anlage integrierten Ventiles wird die (nichtlineare) Betriebskennlinie Q(h) der Anlage festgestellt und in eine lineare Funktion Q(w) umgewandelt. Dies kann durch Zuschaltung eines gezielt nichtlinear wirkenden mechanischen oder elektronischen Übertragungselementes zum Stellungsregler (Ventilantrieb) erfolgen, daß das dem Stellungsregler (6) zur Steuerung des Ventiles (1) vorgegebene Stellsignal (w) in eine solche Ventilöffnung (h) umgewandelt wird, daß eine lineare Funktion Q(w) entsteht.

Die Betriebskennlinie Q(h) der Anlage kann auf verschiedene Weise ermittelt werden, beispielsweise einfach durch direkte Messung der Durchflußmenge Q als Funktion der Ventilöffnung h.

Eine andere Art der Ermittlung erfolgt über die Messung des Eingangsdruckes p₁ vor dem Ventil 1 und des Ausgangsdruckes p₂ nach dem Ventil 1 als Funktion der Ventilöffnung h, wobei aus dieser Druckdifferenz unter Einbeziehung der Werte aus der jedem Ventil eigenen Kennlinie Kᵥ(h) die Betriebskennlinie Q(h) der Anlage rechnerisch ermittelt wird. Diese Verfahrensweise hat den Vorteil, daß die Ermittlung der Betriebskennlinie Q(h) einer Anlage unter Verwendung eines Rechners automatisiert werden kann, sodaß sich die Anlage jeweils auf die Betriebsbedingungen und/oder das verwendete Stellventil von selbst einstellt.

Weitere Einzelheiten der Erfindung werden anhand der Figuren erläutert. Es zeigen
- Fig. 1: die Anwendung der Erfindung bei einer mit einem flüssigen Medium betriebenen Anlage in schematischer Darstellung;
- Fig.2: die Anwendung der Erfindung bei einer mit: einem gasförmigen Medium betriebenen Anlage;
- Fig.3: Schaltbild des Stellungsreglers;
- Fig.4: eine erfindungsgemäße Ausführung eines Ventils mit Stellantrieb.
- Fig.5 bis 7: die verschiedenen Meßfunktionen und Kennlinien der Anlage;
- Fig.8: das Prinzipschaltbild eines induktiv arbeitenden Hubsensors gemäß der Erfindung;
- Fig.9: den Stellungsregler mit einer anderen Ausführung eines berührungslos arbeitenden Hubsensors;
- Fig. 10 und 11: den Stellungsregler gem. Fig. 3, jedoch mit zugeschal tetem nichtlinearen mechanischen oder elektrischen Übertragungselement.

Anhand eines Beispieles wird das erfindungsgemäße Verfahren sowie Vorrichtungen zu seiner Durchführung näher beschrieben.

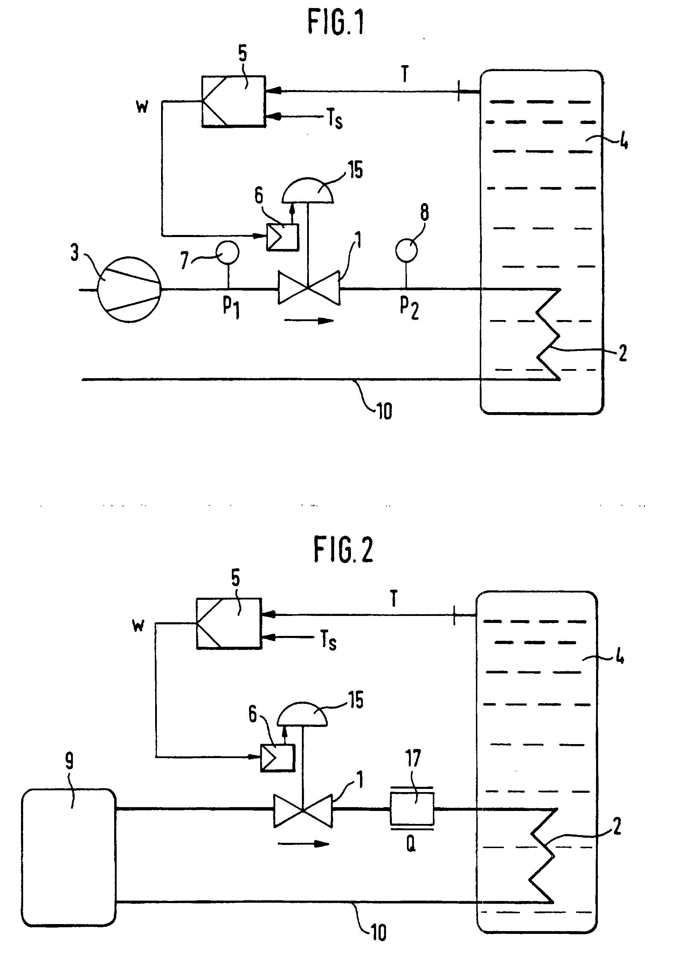

Die Anlage gemäß Figur 1 besteht aus einem Ventil 1, einem Wärmetauscher 2 als Verbrauchswiderstand und einer Pumpe 3, welche den Strömungskreislauf des Mediums in der Anlage bewirkt. Das Ventil 1 ist mit einem Stellungsregler 6 verbunden, dem wiederum zu seiner Steuerung ein Mikroprozessor bzw. Prozeßregler 5 vorgeschaltet ist. Vor und nach dem Ventil 1 sind Drucksensoren 7 und 8 angeordnet, um die Drücke p₁ und p₂ zu ermitteln.

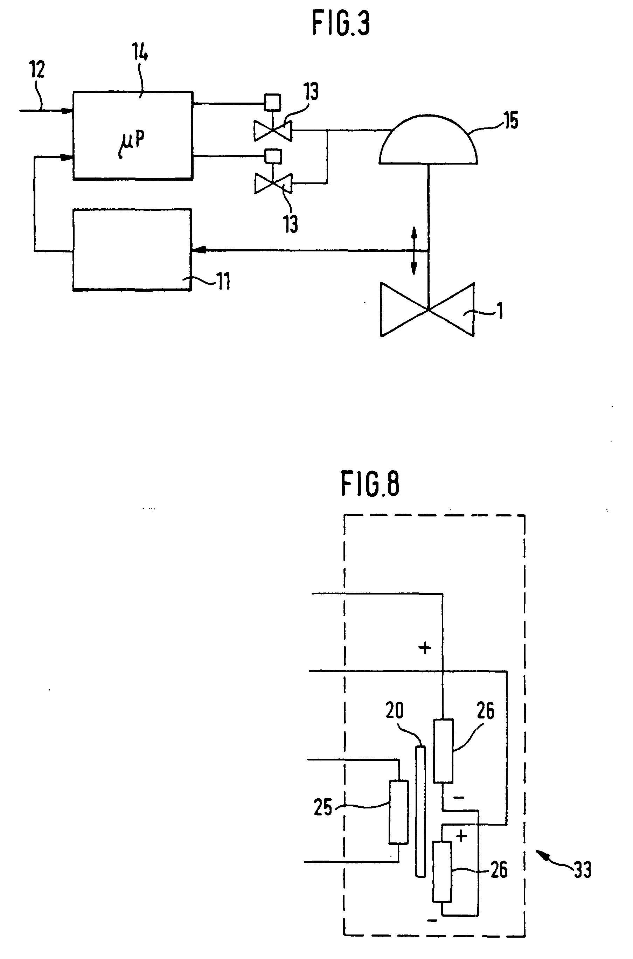

In einem Behälter 4 soll die Temperatur T geregelt werden. Diese wird durch den Prozeßrechner 5 erfaßt, dort: mit einem Sollwert Ts verglichen und das Stellsignal w für das Ventil 1 ermittelt. Dieses Stellsignal w wird dem Stellungsregler 6 des Ventils 1 zugeführt, der mit einem Mikroprozessor- bzw. Rechnerschaltung ausgerüstet ist (Fig. 3).

Der Stellungsregler 6 beinhaltet gemäß Fig. 3 einen Hubsensor 11, eine Microprozessor-gesteuerte Regelelektronik 14, mit einem Sollwerteingang 12, in welchem das Stellsignal w eingespeist wird, der, wie später noch beschrieben, durch einen Prozeßregler 5 vorgegeben ist. Die Regelelektronik 14 wiederum gibt die von ihr erzeugten Signale an die Aktoren 13, die den Ventilantrieb 15 steuern, der über die Spindel 16 den Ventilkegel 30 betätigt. Ferner besitzt die Regelelektronik 14 weitere Eingänge für den Hubsensor 11 und ggfs. auch noch für andere Sensoren.

Da in dieser Anlage eine Flüssigkeitsströmung vorliegt, und quadratisches Widerstandsverhalten (Δp ∼Q²) aller Anlagenkomponenten unterstellt werden kann, kann die Bet:riebskennlinie Q(h) nach den Bernoullischen Gesetzen über die Druckmessungen p₁ und p₂ der Sensoren 7 und 8 mittels der Mikroprozessor- bzw. Rechnerschaltung des Stellungsreglers 6 errechnet werden.

Fig. 2 zeigt eine ähnliche Anlage wie in Fig. 1, lediglich mit dem Unterschied, daß statt der Pumpe 3 ein Dampfkessel 9 installiert ist. In gleicher Weise wie in der Anlage gemäß Fig. 1 soll in einem Behälter 4 die Temperatur T entsprechend der Temperaturvorgabe Ts geregelt werden. Zur Bestimmung der Betriebskennlinie Q(h) ist in dem Kreislauf der Rohrleitung 10 ein Durchflußmesser 17 angeordnet.

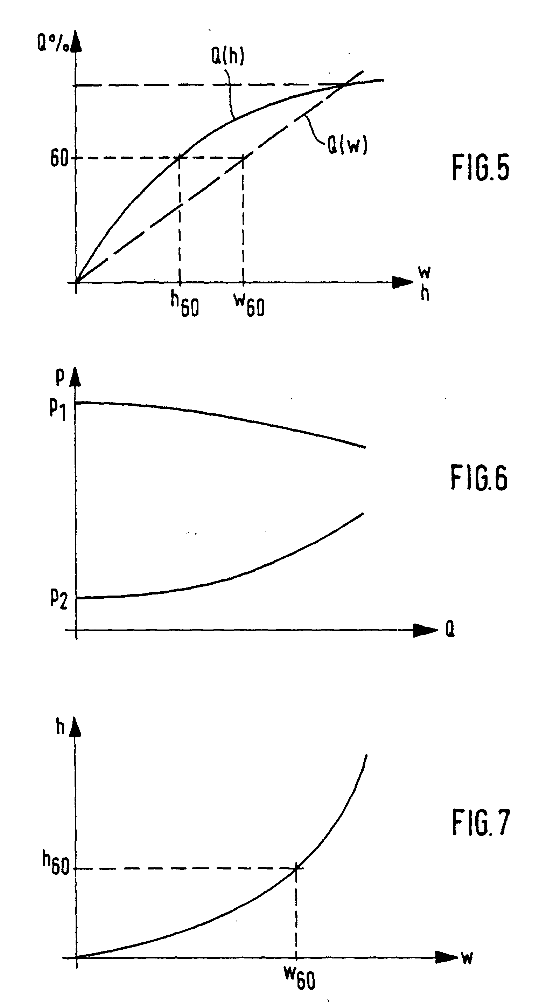

In der Regel ist die Betriebskennlinie Q(h) eines solchen Systems nichtlinear. Um die Regelgüte des Regelkreises dieses Systems zu verbessern, wird deshalb die nichtlineare Betriebskennlinie Q(h) der Anlage festgestellt und in eine lineare Funktion Q(w) umgewandelt (Fig. 5).

Dies kann auf verschiedene Weise erfolgen, z.B. kann ein gezielt nichtlinear wirkendes mechanisches oder elektronisches Übertragungselement dem Stellungsregler 6 zugeschaltet werden. Dies kann beispielsweise eine entsprechend gestaltete Kurvenscheibe sein, deren Radien derart gestaltet sind, daß eine Linearität Q(w) entsteht. Es ist aber auch möglich, zum Stellsignal w eine solche Öffnung h des Ventiles 1 zu wählen, daß eine lineare Funktion Q(w) entsteht.

Am einfachsten erhält man die Betriebskennlinie Q(h) durch Messung des Durchflusses Q als Funktion der Ventilöffnung h (Fig. 5). Es kann aber auch in der Weise vorgegangen werden, daß der Eingangsdruck p₁ vor dem Ventil 1 und der Ausgangsdruck p₂ unmittelbar nach dem Ventil 1 als Funktion der Ventilöffnung h gemessen und unter Einbeziehung der Werte aus der Kennlinie Kᵥ(h) des Ventiles 1 die Betriebskennlinie Q(h) der Anlage rechnerisch ermittelt wird.

Hierzu werden folgende Maßnahmen ergriffen:
1. Es wird das strömungsmechanische Widerstandsverhalten der Anlage mit dem eingebauten Stellventil 1 ermittelt durch Messung der Drücke p₁ und p₂ vor und nach dem Ventil 1 unter Zuordnung der jeweiligen Menge Q. Daraus ergeben sich zwei Kurven, die die Funktion p₁ (Q) und p₂ (Q) darstellen (Fig. 6).
2.
   a) Als nächster Schritt erfolgt mit Hilfe der Bernoullischen Beziehung Δ P ∼Q² die rechnerische Ermittlung der Betriebskennlinie Q(h) der Anlage, welche den Zusammenhang zwischen der Ventilöffnung h und der jeweiligen Durchflußmenge Q darstellt unter Berücksichtigung der durch das verwendete Ventil 1 vorgegebenen Ventilkennlinie,
      oder
   b) bei Nicht-Bernoullischem Widerstandsverhalten der Anlage (Fig. 2) und/oder des Ventils 1, wie es z.B. bei Gasen, laminaren Strömungen, Kavitationsvorgängen u.ä. Betriebszuständen auftritt, werden hierbei die dafür bekannten physikalischen Beziehungen für die rechnerische Ermittlung angesetzt,
      oder
   c) die Betriebskennlinie wird direkt mit der Messung nach 1. ermittelt, indem gleichzeitig mit den Messungen der Drükke p₁ und p₂ und der daraus sich ergebenden Durchflußmenge Q auch die Ventilöffnung h erfaßt und der Durchflußmenge Q zugeordnet wird.
3. Es wird rechnerisch die Funktion zwischen Ventilöffnung h und dem Stellsignal w ermittelt (Fig. 7), die mit der nach 2. ermittelten Betriebskennlinie Q(h) überlagert auf einen linearen Zusammenhang zwischen Durchflußmenge Q und Stellsignal w führt (Fig. 5).
4. Durch Überlagerung der beiden Funktionen nach 2) und 3) ergibt sich eine lineare Funktion Q (w) für die Durchflußmenge Q und das Stellsignal w (Fig. 5).

Es können nun diese gemessenen Drücke p₁ und p₂ entweder per Hand in den Programmspeicher der Regelelektronik 14 des Stellungsreglers 6 eingegeben werden, so daß die Regelelektronik 14 die Betriebskennlinie nach 2a und 2b errechnet. Es können aber auch die Rechnungen per Hand durchgeführt und nur die Ergebnisse in den Programmspeicher der Regelelektronik 14 eingegeben werden. Es ist alternativ auch möglich, daß der Rechner der Regelelektronik 14 mit einem entsprechenden Rechenprogramm die durch die Drucksensoren 7 und 8 ermittelten Werte für p₁ und p₂ unmittelbar zugeleitet bekommt und die Rechnungen nach 2) bis 4) ausführt. Alle diese Rechnungen können allerdings auch im Rechner des Prozeßreglers 5 ausgeführt und nur die Ergebnisse der Regelelektronik 14 des Stellungsreglers 6 zugeleitet werden. In diesem Fall müsen die Drucksensoren 7 und 8 direkt mit dem Prozeßregler 5 verbunden sein.

Eine vorteilhafte Weiterbildung besteht darin, daß die Drucksensoren 7 und 8 im Ventil 1 integriert sind. Durch die Verbindung der Drucksensoren 7 und 8 direkt mit der Regelelektronik 14 erfährt das Ventil 1 und damit die Anlage eine Selbststeuerung. Die ermittelten Drücke werden, wie oben schon erwähnt, direkt in den Rechner der Regelelektronik 14 zur Weiterverarbeitung geleitet.

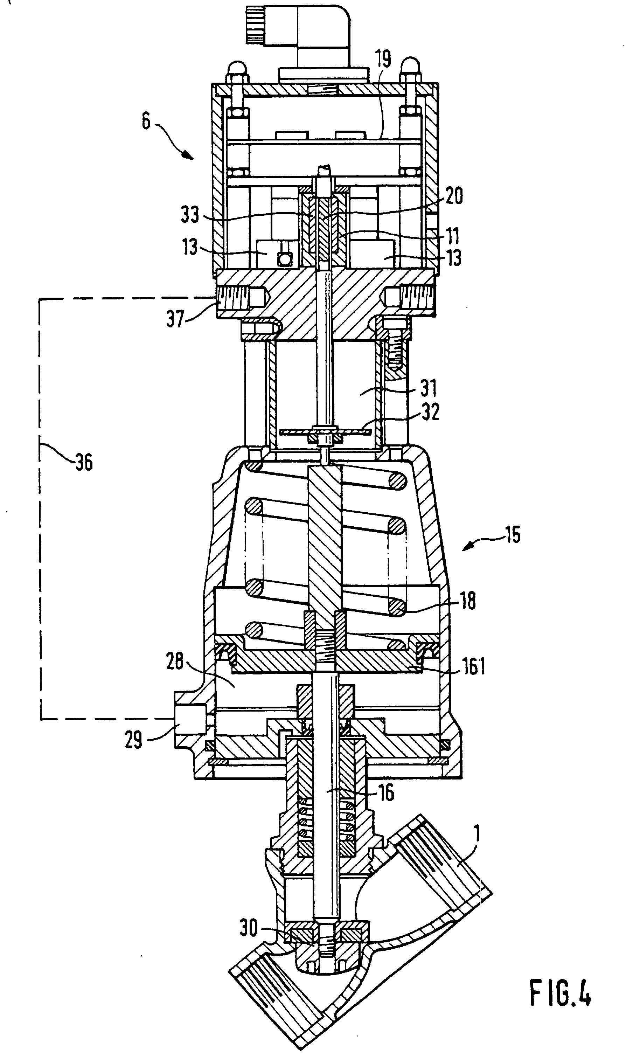

In Fig. 4 ist eine konstruktive Ausführung des Ventils 1 in Verbindung mit dem Stellantrieb 15 und dem Stellungsregler 6 gezeigt. Der Ventilkegel 30 des Ventils 1 ist über die Spindel 16 mit dem Ventilantrieb 15 verbunden, der aus dem Antriebskolben 161 und der Rückstellfeder 18 im wesentlichen besteht. Der Antriebskolben 161 wird zur Verstellung des Ventilkegels 30 über eine Luftanschlußöffnung 29 und eine Luftkammer 28 beaufschlagt. Dieser Stellantrieb 15 ist direkt auf das Ventil 1 zentrisch zur Ventilspindel 16 aufgesetzt.

Durch eine Steuerleitung 36 ist der Stellungsregler 6 mit seiner Ausgangsöffnung 37 mit der Luftanschlußöffnung 29 des Stellantriebes 15 verbunden. Über die Aktoren 13 wird die Luftzufuhr in die Luftkammer 28 für den Stellantrieb 15 des Ventils 1 gesteuert.

Auf diesen Stellantrieb 15 ist der Stellungsregler 6 ebenfalls zentrisch zur Ventilspindel 16 aufgesetzt. Dadurch ergibt sich eine sehr kompakte und einfache Bauart ohne zusätzliche Übertragungsteile, die zu Ungenauigkeiten führen. Das zwischen Ventilantrieb 15 und Stellungsregler 6 angeordnete Schauglas 31 mit dem an der Ventilspindel 16 angeordneten Zeiger 32 ermöglicht ein Ablesen der Ventilstellung. Die Ventilspindel 16 wird bis in den Stellungsregler 6 fortgesetzt und trägt an ihrem oberen Ende einen Hubsensor 11. Über dem Hubsensor 11 sind Elektronikplatten 19 angeordnet, die auch den Mikroprozessor 14 des Stellungsreglers 6 enthalten.

Der Hubsensor 11 kann in verschiedener Weise ausgeführt werden. Vorzugsweise ist der Hubsensor 11 als ein magnetisch-induktives System ausgeführt und arbeitet berührungslos. Dies ergibt eine besonders betriebssichere Ausführung, da zum einen keine bewegten Teile, wie z.B. Hebel u.dgl. von außen zugänglich sein müssen, zum anderen ist die Huberfassung verschleißfrei und vibrationsunempfindlich. Dies ist die Voraussetzung für eine genaue und exakte Steuerung und Regelung der Ventilöffnung h.

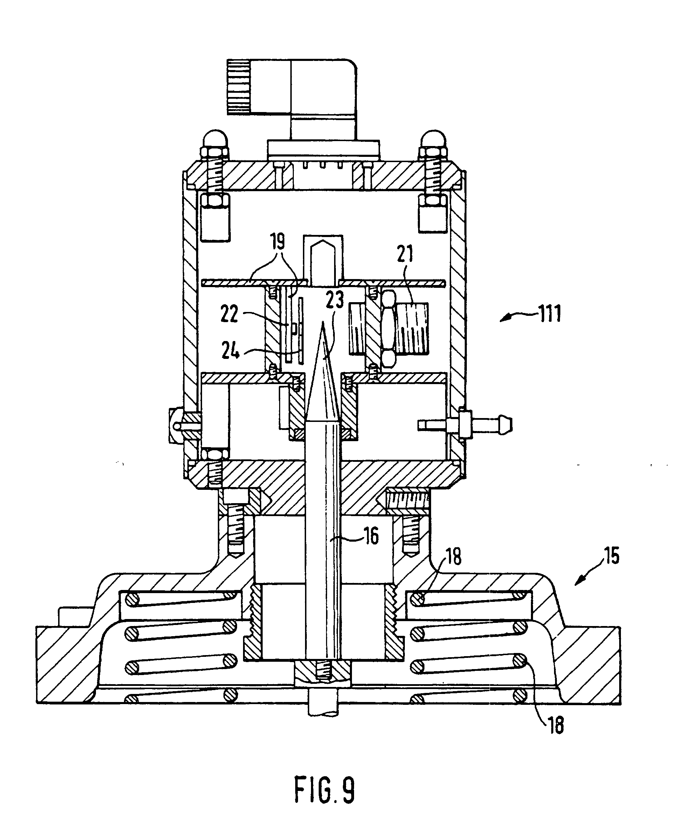

Fig. 8 zeigt in einem Schaltbild den Aufbau und das Funktionsprinzip des magnetisch-induktiv arbeitenden Hubsensors 11. Die Verlängerung der Ventilspindel 16 trägt an ihrem Ende einen Ferritkern 20, welcher in einer Spule 33 entsprechend dem Hub h des Ventilkegels 30 auf- und abbewegt wird. Entsprechend seiner Stellung innerhalb der Spule 33 wird ein entsprechender Strom oder Spannung induktiv erzeugt als Maß für die Ventilöffnung h. Eine Besonderheit des Hubsensors 11 besteht darin, daß die Spule 33 eine Primärwicklung 25 und zwei Sekundärwicklungen 26 aufweist, wobei die beiden Sekundärwicklungen 26 koaxial in Reihe angeordnet, aber gegeneinander geschaltet sind.

D.h. der Ausgang (-) der ersten Sekundärwicklung 26 ist nicht mit dem Eingang (+) der zweiten Sekundärwicklung, sondern mit deren Ausgang (-) verbunden. Durch die Stellbewegung der Ventilspindel 16 wird der Ferritkern (20) innerhalb der Spule (33) positioniert und ein entsprechendes Stromsignal I induziert. Steht der Ferritkern 20 symetrisch zwischen den beiden Sekundärspulen 26, so ist das erzeugte Stromsignal null, da sich die Induktion beider Spulen 26 gegeneinander aufhebt. In den Endlagen wird ein Plus- oder Minus-Stromsignal erzeugt. Anstelle des Stromsignals kann aber auch ein Spannungssignal verwendet werden. Diese Schaltung hat den Vorzug, daß damit ein annähernd linearer Verlauf des Stromsignals I zur Ventilöffnung h erreicht wird, was für die Exaktheit der Regelung von Bedeutung ist, wie eingangs bereits erwähnt.

Fig. 9 zeigt eine andere Ausführung eines solchen berührungslos arbeitenden Hubsensors. Der Hubsensor 111 arbeitet nach einem optischen Prinzip. Am Ende der verlängerten Ventilspindel 16 ist statt des Ferritkernes 20 eine Abdeckblende 23 aufgesetzt. Diese Abdeckblende 23 ist kegelig ausgeführt, damit eine genau rechtwinklige Justierung zum Strahlengang des Lichtes sich erübrigt.

Vor einer Fotozelle 22 ist eine Schlitzblende 24 angeordnet, welche durch die Abdeckblende 23 entsprechend der Hubbewegung h der Ventilspindel 16 abgedeckt und so das aus der Fotodiode 21 austretende Licht für die Photozelle 22 mehr oder weniger freigegeben wird. Dadurch wird analog zum Lichteinfall und damit der Stellung der Abdeckblende 23 ein photoelektrischer Strom oder Spannung erzeugt, was hier ebenfalls als Maß für die Ventilöffnung h dient. Durch die Gestaltung der Mantellinie der Abdeckblende 23 kann auch eine Linearisierung der Funktion I(h) erreicht werden.

Eine besonders zweckmäßige Ausführung des Hubsensors 111 besteht in einer Abwandlung der Fotozelle 22 derart, daß die durch die Schlitzblende 24 tretenden Lichtstrahlen anstatt von einer Fotozelle von einer sehr großen Anzahl kleinster Einzel-Fotoelemente - sog. Fotobits - aufgefangen werden, die digital direktverwertbare Signale abgeben je nachdem, wie viele durch die Stellung der Abdeckblende 23 den durch die Fotodiode 21 ausgesandten Lichtstrahlen ausgesetzt sind. Diese Signale können, ohne sie erst durch Digitalisierung aufbereiten zu müssen, direkt dem Mikroprozessor 14 zur Verarbeitung zugeführt werden. Diese Art der fotoelektrischen Abtastung hat außerdem den Vorteil, daß die Messungen unabhängig von der Konstanthaltung der Lichtintensität sind.

Die beschriebenen berührungslos arbeitenden Hubsensoren können sowohl mit Vorteil bei der Anwendung des eingangs beschriebenen Verfahrens zur Linearisierung der Betriebskennlinie Q(h) als auch unabhängig davon verwendet werden. Die beschriebenen, nach induktiven als auch nach optischen Prinzipien arbeitenden Hubsensoren tragen zu einer Linearisierung der Regelgrößen bei, wenn auch, allein angewandt, nur für den Bereich der Hubsensoren.

Wie eingangs schon erwähnt, kann die Umwandlung der nichtlinearen Betriebskennlinie Q(h) der Anlage in eine lineare Funktion Q(w) auch durch ein gezielt nichtlinear wirkendes mechanisches oder elektronisches Übertragungselement erfolgen, daß dem Stellungsregler 6 zugeschaltet wird.

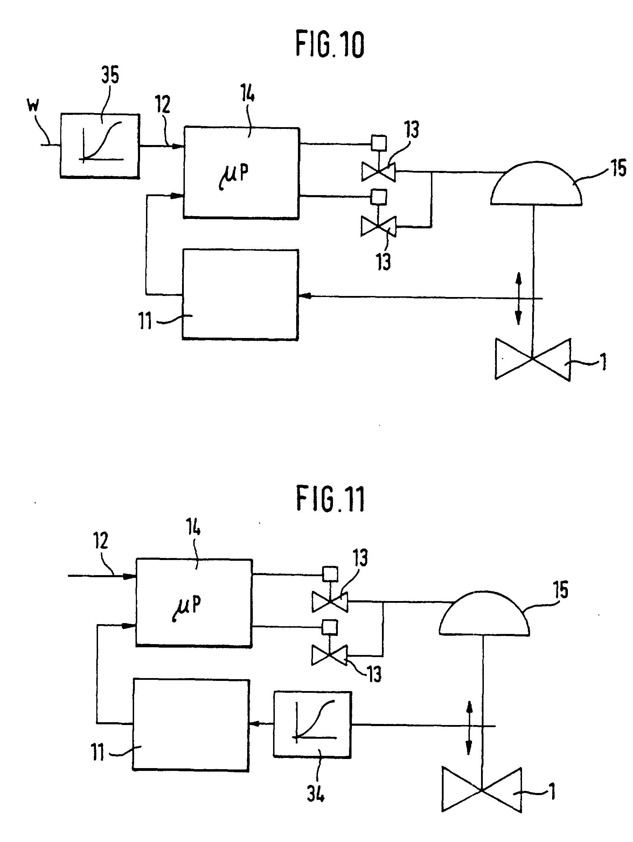

In Figur 10 ist die Zuschaltung eines elektrischen Übertragungselementes 35 zum Stellungsregler 6 gezeigt. Das vom Prozeßregler 5 kommende Stellsignal w durchläuft in diesem Fall erst das elektrische Übertragungselement 35, bevor es den Eingang 12 der Regelelektronik 14 des Stellungsreglers 6 erreicht. Durch das zugeschaltete Übertragungselement 35 wird dem Stellungssignal w die programmierte Funktion h(w) überlagert, so daß die lineare Funktion Q(w) entsteht, die dann, wie oben bereits beschrieben, von der Regelelektronik 14 gebildet.

Bei der Verwendung eines mechanischen nichtlinearen Übertragungselementes 34 wird dies zweckmäßig zwischen den Ventilantrieb 15 und den Hubsensor 11 des Stellungsreglers eingeschaltet, wobei das mechanische Übertragungselement 34 jeweils so programmiert ist, daß der zum Hubsensor 11 rückgeführten Ventilöffnung h ein solcher Wert zugefügt wird, daß eine lineare Funktion Q(w) entsteht. Das nichtlineare mechanische Übertragungselement 34 kann sowohl als Kurvenscheibe, deren Radien derart gebildet sind, daß eine Linearität Q(w) entsteht, oder als entsprechend nichtlinear wirkendes Potenziometer ausgebildet sein.

### Bezugszeichenliste

- 1: Ventil
- 2: Verbrauchswiderstand, Wärmetauscher
- 3: Pumpe
- 4: Behälter
- 5: Prozeßregler/-rechner (reducer)
- 6: Stellungsregler
- 7, 8: Drucksensoren
- 9: Dampfkessel
- 10: Rohrleitung
- 11, 111: Hubsensor
- 12: Sollwert-Eingang
- 13: Aktoren für Ventilantrieb
- 14: Regelelektronik mikroprozessorgesteuert
- 15: Ventilantrieb
- 16: Ventilspindel
- 161: Antriebskolben
- 17: Durchflußsensor
- 18: Rückstellfeder
- 19: Regelelektronik, Leiterplatte
- 20: Ferrit-Kern
- 21: Lichtquelle, Fotodiode
- 22: Fotozelle
- 23: Abdeckblende
- 24: Schlitzblende
- 25: Primärwicklung
- 26: Sekundärwicklung
- 28: Luftkammer
- 29: Luftanschlußöffnung
- 30: Ventilkegel
- 31: Schauglas
- 32: Anzeiger
- 33: Spule
- 34: Mechanisches Übertragungselement
- 35: Elektrisches Übertragungselement
- 36: Steuerleitung
- 37: Ausgangsöffnung
- h: Ventilöffnung, Hub
- w: Stellsignal
- Q: Durchflußmenge

## Patentansprüche

1. Verfahren zur Steuerung der Öffnung h eines in einer Anlage integrierten Ventiles mittels eines Stellungsreglers, dem ein Stellsignal w zugeführt wird, auf eine gewünschte Durchflußmenge Q, **dadurch gekennzeichnet, daß** die nichtlineare Betriebskennlinie Q(h) der Anlage durch Bestimmung der Durchflußmenge Q in Abhängigkeit der Ventilöffnung h ermittelt und zu den jeweiligen Ventilöffnungen h die zugehörige Stellsignal w ermittelt wird, so daß sich eine Funktion w(h) ergibt, die so erhaltene Funktion w(h) der Funktion Q(h) überlagert wird, so daß die Werte Q(w) auf einer Geraden liegen, wobei die auf einer Geraden liegenden Werte des Stellsignales w zur Steuerung des Ventiles für eine gewünschte Durchflußmenge Q eingesetzt werden.

2. Verfahren nach Anspruch 1, **dadurch gekennzeichnet, daß** die Bestimmung der Durchflußmenge Q durch direkte Messung in der Anlage als Funktion der Ventilöffnung h bestimmt wird.

3. Verfahren nach Anspruch 1, **dadurch gekennzeichnet, daß** die Bestimmung der Durchflußmenge Q durch Messen des Eingangsdruckes (p₁) vor dem Ventil und des Ausgangsdruckes (p₂) unmittelbar nach dem Ventil als Funktion der zugehörigen Ventilöffnung h gemessen und unter Einbeziehung der Werte aus der Kennlinie Kᵥ(h) des Ventils (1) einem Rechner zugeleitet werden, welcher die Funktion h(w) aus den Meßwerten (p₁, p₂; Q) ermittelt und auf einen Mikroprozessor (14) des Stellungsreglers (6) überträgt.

4. Verfahren nach Anspruch 3, **dadurch gekennzeichnet, daß** die gemessenen Werte (p₁ und p₂; Q) einem Rechner zur Verarbeitung zugeleitet werden, welcher die Funktion h(w) aus den Meßwerten (p₁, p₂; Q) ermittelt und auf den Mikroprozessor (14) des Stellungsreglers (6) überträgt.

5. Vorrichtung zur Steuerung der Öffnung h eines in eine Anlage integrierten Ventiles (1), wobei die Anlage einen Verbrauchswiderstand (2) und die Durchströmung der Anlage bewirkende Mittel (3; 9) aufweist, und das Ventil (1) über einen Stellungsregler (6) betätigt wird, der einen Sensor (11; 111) zur Erfassung der aktuellen Ventilöffnung h, einen Sollwerteingang (12) für ein Stellsignal w sowie Aktoren (13) zur Ansteuerung des Ventilantriebes (15) und eine Mikroprozessorschaltung aufweist, **dadurch gekennzeichnet, daß** Mittel (7, 8; 17) zur Feststellung der Menge Q des die Anlage durchströmenden Mediums in Abhängigkeit zur Ventilöffnung h vorgesehen sind und der Stellungsregler (6) mit einer Regelelektronik (14) ausgerüstet ist, die diese werte Q(h) einem vorgegebenen Stellsignal w jeweils zuordnet, wobei das Stellsignal w für die Steuerung des Ventils (1) in eine solche Ventilöffnung h umgewandelt wird, daß eine lineare Funktion Q(w) entsteht.

6. Vorrichtung nach Anspruch 5, **dadurch gekennzeichnet, daß** vor und nach dem Ventil (1) Drucksensoren (7, 8) angeordnet sind.

7. Vorrichtung nach Anspruch 6, **dadurch gekennzeichnet, daß** die Drucksensoren (7, 8) in das Ventil (1) integriert sind.

8. Vorrichtung nach einem der Ansprüche 5 oder 6, **dadurch gekennzeichnet, daß** die Regelelektronik (14) des Stellungsreglers (6) mit den Drucksensoren (7, 8) verbunden ist und die für die Steuerung des Ventils (1) gemessenen Drücke (p₁, p₂) zur Ermittlung der Betriebskennlinie Q(h) der Anlage auswertet.

9. Vorrichtung nach Anspruch 5, **dadurch gekennzeichnet, daß** für das die Anlage durchströmende Medium eine Rohrleitung (10) vorgesehen ist, in welcher ein Durchflußmesser (17) angeordnet ist.

10. Vorrichtung nach Anspruch 5, **dadurch gekennzeichnet, daß** in das Ventil (1) ein Durchflußmesser (17) integriert ist.

11. Vorrichtung nach einem oder mehreren der Ansprüche 5 bis 10, **dadurch gekennzeichnet, daß** dem Stellungsregler (6) ein gezielt nichtlinear wirkendes mechanisches oder elektronisches Übertragungselement (34; 35) zugeschaltet ist, das derart ausgebildet ist, daß das dem Stellungsregler (6) zugeführte Stellsignal w in eine solche Ventilöffnung h umgewandelt wird, daß eine lineare Funktion Q(w) entsteht.

12. Vorrichtung nach Anspruch 11, **dadurch gekennzeichnet, daß** das mechanische Übertragungselement (34) zwischen dem Ventilantrieb (15) und einem die Ventilöffnung h anzeigenden Hubsensor (11) zugeschaltet ist.

13. Vorrichtung nach einem der Ansprüche 11 oder 12, **dadurch gekennzeichnet, daß** das mechanische Übertragungselement (34) als Kurvenscheibe ausgebildet ist, deren Radien derart gestaltet sind, daß eine Linearität Q(W) entsteht.

14. Vorrichtung nach Anspruch 11, **dadurch gekennzeichnet, daß** das elektrische Übertragungselement (35) der Regelelektronik (14) des Stellungsreglers (6) vorgeschaltet und derart programmiert ist, daß eine Linearität Q(w) entsteht.

15. Vorrichtung nach einem oder mehreren der Ansprüche 5 bis 14, **dadurch gekennzeichnet, daß** das Ventil (1) einen auf eine Ventilspindel (16) einwirkenden Ventilantrieb (15) aufweist, in dessen axialer Verlängerung der Stellungsregler (6) zentrisch zur Ventilspindel (16) angeordnet ist.

16. Vorrichtung nach einem oder mehreren der Ansprüche 5 bis 15, **dadurch gekennzeichnet, daß** der Stellungsregler (6) einen berühruhgslos arbeitenden Hubsensor (11; 111) aufweist, durch den die ventilöffnung h erfaßt wird.

17. Vorrichtung nach Anspruch 16, **dadurch gekennzeichnet, daß** der Hubsensor (11) magnetisch-induktiv arbeitet.

18. Vorrichtung nach Anspruch 17, **dadurch gekennzeichnet, daß** der Hubsensor (11) eine Spule (33) aufweist, in welcher ein Ferritkern (20) entsprechend der Stellbewegung für die Ventilöffnung h eintaucht, die eine Primärwicklung (25) und zwei Sekundärwicklungen (26) beinhaltet, wobei die beiden Sekundärwicklungen (26) koaxial in Reihe angeordnet sind.

19. Vorrichtung nach Anspruch 18, **dadurch gekennzeichnet, daß** der Ferritkern (20) entsprechend der Stellbewegung für die Ventilöffnung h innerhalb der Spule (33) positioniert ist.

20. Vorrichtung nach einem der Ansprüche 18 oder 19, **dadurch gekennzeichnet, daß** die beiden Sekundärspulen (26) gegeneinander geschaltet sind, sodaß sich bei symmetrischer Lage des Ferritkernes (20) zu den beiden Sekundärwicklungen (26) die Induktion aufhebt.

21. Vorrichtung nach Anspruch 16, **dadurch gekennzeichnet, daß** der Hubsensor (111) eine Fotodiode (21), eine mit der Ventilspindel (16) gekoppelte bewegliche Abdeckblende (23) sowie Mittel zur Aufnahme der von der Fotodiode (21) ausgesandten Lichtstrahlen aufweist.

22. Vorrichtung nach Anspruch 21, **dadurch gekennzeichnet, daß** die Abdeckblende (23) am Ende der verlängerten Ventilspindel (16) angeordnet ist und mit einer Schlitzblende (24) zusammenarbeitet.

23. Vorrichtung nach einem der Ansprüche 21 oder 22, **dadurch gekennzeichnet, daß** die Abdeckblende (23) rotationssymmetrisch ausgebildet ist.

24. Vorrichtung nach einem oder mehreren der Ansprüche 21 bis 23, **dadurch gekennzeichnet, daß** die Abdeckblende (23) so in ihrer Mantellinie gestaltet ist, daß eine Linearisierung des durch die Stellung der Abdeckblende 23 erzeugten Stromes I in Abhängigkeit der Ventilöffnung h [Funktion I(h)] erfolgt.

25. Vorrichtung nach einem oder mehreren der Ansprüche 21 bis 24, **dadurch gekennzeichnet, daß** anstatt einer die Lichtstrahlen der Fotodiode (21) auffangenden Fotozelle (22) diese in eine sehr große Anzahl von kleinsten Einzel-Fotoelementen (Fotobits) aufgeteilt ist, welche digital direktverwertbare Signale abgeben.

26. Vorrichtung nach Anspruch 25, **dadurch gekennzeichnet, daß** die Fotobits an den Mikroprozessor (14) des Stellungsreglers (6) angeschlossen sind.

## Claims

1. A method of controlling the opening **h** of a valve integrated in a plant by means of a position regulator - to which a setting signal **w** is delivered - with respect to a desired through-flow quantity **Q**, **characterized in that** the non-linear operating characteristic **Q(h)** of the plant is obtained by determining the through-flow quantity **Q** as a function of the valve opening **h** and the associated setting signal **w** is obtained with respect to the respective valve openings **h,** so that a function **w(h)** is produced, the function **w(h)** thus obtained is superimposed on the function **Q(h),** so that the values **Q(w)** lie on a straight line, wherein the values of the setting signal **w** lying on a straight line are used to control the valve for a desired through-flow quantity **Q.**

2. A method according to Claim 1, **characterized in that** the determination of the through-flow quantity **Q** takes place by direct measurement in the plant as a function of the valve opening **h**.

3. A method according to Claim 1, **characterized in that** the determination of the through-flow quantity **Q** by measuring the input pressure **(p**_{**1**}**)** upstream of the valve and the output pressure **(p**_{**2**}**)** immediately downstream of the valve is measured as a function of the associated valve opening **h** and is fed - whilst including the values from the characteristic **K**_{**v**}**(h)** of the valve (1) - to a computer determining the function **h(w)** from the measurement values (**p**_{**1**}**, p**_{**2**}**; Q**) and transmitting them to a microprocessor (14) of the position regulator (6).

4. A method according to Claim 3, **characterized in that** the measured values (**p**_{**1**} and **p**_{**2**}**; Q**) are delivered to a computer for processing, the computer determining the function **h(w)** from the measurement values **(p**_{**1**}**, p**_{**2**}**; Q**) and transmitting them to the microprocessor (14) of the position regulator (6).

5. A device for controlling the opening **h** of a valve (1) integrated in a plant, wherein the plant comprises a resistance (2) of the consuming device and means (3; 9) effecting the through-flow of the plant, and the valve (1) is actuated by way of a position regulator (6) comprising a sensor (11; 111) for determining the current valve opening **h,** a nominal-value input (12) for a setting signal **w** and actuators (13) for actuating the valve drive (15) and a microprocessor circuit, **characterized in that** means (7, 8; 17) are provided for establishing the quantity **Q** of the medium flowing through the plant as a function of the valve opening **h** and the position regulator (6) is provided with an electronic regulating device (14) correlating the said values **Q(h)** with a respective pre-determined setting signal **w,** wherein the setting signal **w** for controlling the valve (1) is converted into a valve opening **h** such as to result in a linear function **Q(w).**

6. A device according to Claim 5, **characterized in that** pressure sensors (7, 8) are arranged upstream and downstream of the valve (1).

7. A device according to Claim 6, **characterized in that** the pressure sensors (7, 8) are integrated in the valve (1).

8. A device according to one of Claims 5 and 6, **characterized in that** the electronic regulating device (14) of the position regulator (6) is connected to the pressure sensors (7, 8) and the pressures (**p**_{**1**}**, p**_{**2**}) measured for the control of the valve (1) are evaluated in order to determine the operating characteristic **Q(h)** of the plant.

9. A device according to Claim 5, **characterized in that** a pipeline (10), in which a flow meter (17) is arranged, is provided for the medium flowing through the plant.

10. A device according to Claim 5, **characterized in that** a flow meter (17) is integrated in the valve (1).

11. A device according to one or more of Claims 5 to 10, **characterized in that** the position regulator (6) has connected thereto a mechanical or electronic transmission member (34; 35) acting in a desired non-linear manner and designed in such a way that the setting signal w delivered to the position regulator (6) is converted into a valve opening h such as to result in a linear function **Q(w).**

12. A device according to Claim 11, **characterized in that** the mechanical transmission member (34) is connected between the valve drive (15) and a lifting sensor (11) indicating the valve opening **h**.

13. A device according to one of Claims 11 and 12, **characterized in that** the mechanical transmission member (34) is designed in the form of a cam disc, the radii of which are formed in such a way as to produce linearity **Q(w).**

14. A device according to Claim 11, **characterized in that** the electrical transmission member (35) is arranged upstream of the electronic regulating device (14) of the position regulator (6) and is programmed in such a way as to produce linearity **Q(w).**

15. A device according to one or more of Claims 5 to 14, **characterized in that** the valve (1) comprises a valve drive (15) which acts upon a valve spindle (16) and in the axial extension of which the position regulator (6) is arranged centrally with respect to the valve spindle (16).

16. A device according to one or more of Claims 5 to 15, **characterized in that** the position regulator (6) comprises a lifting sensor (11; 111) which operates without contact and by which the valve opening **h** is determined.

17. A device according to Claim 16, **characterized in that** the lifting sensor (11) operates magnetically and inductively.

18. A device according to Claim 17, **characterized in that** the lifting sensor (11) comprises a coil (33) in which a ferrite core (20) plunges in accordance with the setting movement for the valve opening **h** and which contains a primary winding (25) and two secondary windings (26), wherein the two secondary windings (26) are arranged coaxially in series.

19. A device according to Claim 18, **characterized in that** the ferrite core (20) is positioned inside the coil (33) in accordance with the setting movement for the valve opening **h**.

20. A device according to one of Claims 18 and 19, **characterized in that** the two secondary windings (26) are connected opposite each other, so that the induction is cancelled out when the ferrite core (20) is positioned symmetrically with respect to the two secondary windings (26).

21. A device according to Claim 16, **characterized in that** the lifting sensor (111) comprises a photodiode (21), a movable cover diaphragm (23) coupled to the valve spindle (16) and means for receiving the light rays emitted by the photodiode (21).

22. A device according to Claim 21, **characterized in that** the cover diaphragm (23) is arranged at the end of the extended valve spindle (16) and cooperates with a slit diaphragm (24).

23. A device according to one of Claims 21 and 22, **characterized in that** the cover diaphragm (23) is rotationally symmetrical.

24. A device according to one or more of Claims 21 to 23, **characterized in that** the cover diaphragm (23) is designed in such a way with respect to the surface line thereof that a linearization of the flow **I** generated by the position of the cover diaphragm (23) takes place as a function of the valve opening **h** [function **I(h)**].

25. A device according to one or more of Claims 21 to 24, **characterized in that** instead of a photocell (22) intercepting the light rays of the photodiode (21) the said photocell is subdivided into a very large number of very small individual photo-elements (photo-bits) which emit signals which can be directly evaluated digitally.

26. A device according to Claim 25, **characterized in that** the photo-bits are connected to the microprocessor (14) of the position regulator (6).

## Revendications

1. Procédé de commande d'ouverture h d'une vanne intégrée dans une installation, au moyen d'un régulateur de position auquel est transmis un signal de commande w, pour un débit Q souhaité, **caractérisé en ce que** la caractéristique de fonctionnement Q(h) non linéaire de l'installation est recherchée en déterminant le débit Q en fonction de l'ouverture h de la vanne et **en ce que** pour les ouvertures respectives h de la vanne le signal w de commande correspondant est déterminé, si bien qu'une fonction w(h) en résulte, que la fonction w(h) ainsi trouvée est superposée à la fonction Q(h), de sorte que les valeurs Q(w) se situent sur une droite, les valeurs du signal w de commande se trouvant sur une droite étant utilisées pour commander la vanne en ce qui concerne le débit Q.

2. Procédé selon la revendication 1, **caractérisé en ce que** la détermination du débit Q s'opère par une mesure directe dans l'installation en fonction de l'ouverture h de la vanne.

3. Procédé selon la revendication 1, **caractérisé en ce que** la détermination du débit Q s'opère par mesure de la pression (p₁) d'entrée avant la vanne et de la pression (p₂) de sortie immédiatement après la vanne en fonction de l'ouverture h correspondante de la vanne, et que ces valeurs sont transmises à un calculateur en tenant compte des valeurs résultant de la ligne caractéristique Kᵥ(h) de la vanne (1), calculateur qui détermine la fonction h(w) à partir des valeurs mesurées (p₁, p₂; Q) et la transmet à un microprocesseur (14) du régulateur de position (6).

4. Procédé selon la revendication 3, **caractérisé en ce que** les valeurs mesurées (p₁, p₂; Q) sont transmises à un calculateur pour y être traitées, calculateur qui détermine la fonction h(w) à partir des valeurs mesurées (p₁, p₂; Q) et la transmet au microprocesseur (14) du régulateur de position (6).

5. Dispositif pour commander l'ouverture h d'une vanne (1) intégrée dans une installation, cette installation comportant une résistance de consommation (2) et des dispositifs (3 ; 9) provoquant l'écoulement d'un agent dans l'installation, la vanne (1) étant actionnée à l'aide d'un régulateur de position (6) qui comporte un capteur (11 ; 111) pour saisir l'ouverture actuelle h de la vanne, une entrée (12) de la valeur de consigne pour un signal de commande w ainsi que des actionneurs (13) pour entraîner le mécanisme de commande (15) de la vanne et un circuit à microprocesseur, **caractérisé en ce que** des moyens (7, 8 ; 17) sont prévus pour déterminer la quantité Q de l'agent traversant l'installation en fonction de l'ouverture h de la vanne et **en ce que** le régulateur (6) de position est pourvu d'un équipement électronique (14) pour la régulation qui attribue ces valeurs Q(h) à respectivement un signal de commande w prédéterminé, ce signal de commande w étant transformé, pour la commande de la vanne (1), en une telle ouverture h de la vanne qu'une fonction Q(w) linéaire est obtenue.

6. Dispositif selon la revendication 5, **caractérisé en ce qu'**en amont et en aval de la vanne (1) des capteurs de pression (7, 8) sont disposés.

7. Dispositif selon la revendication 6, **caractérisé en ce que** les capteurs de pression (7, 8) sont intégrés dans la vanne (1).

8. Dispositif selon l'une des revendications 5 ou 6, **caractérisé en ce que** l'équipement électronique (14) du régulateur de position (6) est relié avec les capteurs de pression (7, 8) et qu'il évalue les pressions (p₁, p₂) mesurées lors de la commande de la vanne (1) pour déterminer la caractéristique de fonctionnement Q(h) de l'installation.

9. Dispositif selon la revendication 5, **caractérisé en ce que** pour l'agent passant à travers l'installation une conduite (10) est prévue dans laquelle un débitmètre (17) est disposé.

10. Dispositif selon la revendication 5, **caractérisé en ce qu'**un débitmètre (17) est intégré dans la vanne (1).

11. Dispositif selon l'une ou plusieurs des revendications 5 à 10, **caractérisé en ce qu'**au régulateur de position 6 il est raccordé un élément de transmission (34 ; 35) mécanique ou électronique agissant explicitement de façon non linéaire qui est conçu de telle façon que le signal de commande w transmis au régulateur de position (6) est transformé en une telle ouverture h de la vanne qu'une fonction Q(w) linéaire est obtenue.

12. Dispositif selon la revendication 11, **caractérisé en ce que** l'élément de transmission (34) mécanique est situé entre le mécanisme de commande (15) de la vanne et un capteur de course (11) indiquant l'ouverture h de la vanne.

13. Dispositif selon l'une des revendications 11 ou 12, **caractérisé en ce que** l'élément de transmission (34) mécanique est conçu comme came dont les rayons sont conformés de telle manière qu'une linéarité Q(w) est obtenue.

14. Dispositif selon la revendication 11, **caractérisé en ce que** l'élément de transmission (35) électrique est placé en amont de l'équipement électronique (14) du régulateur de position (6) et est programmé de telle manière qu'une linéarité Q(w) est obtenue.

15. Dispositif selon l'une ou plusieurs des revendications 5 à 14, **caractérisé en ce que** la vanne (1) comporte un mécanisme de commande (15) de la vanne agissant sur la broche (16) de la vanne, dans la prolongation axiale du mécanisme de commande étant disposé le régulateur de position (6), de façon centrée par rapport à la broche (16) de la vanne.

16. Dispositif selon l'une ou plusieurs des revendications 5 à 15, **caractérisé en ce que** le régulateur de position (6) dispose d'un capteur de course (11; 111) fonctionnant sans contact et qui saisit l'ouverture h de la vanne.

17. Dispositif selon la revendication 16, **caractérisé en ce que** le capteur de course (11) fonctionne de façon magnéto-inductive.

18. Dispositif selon la revendication 17, **caractérisé en ce que** le capteur de course (11) contient une bobine (33) dans laquelle plonge un noyau en ferrite (20) en fonction du mouvement de commande pour l'ouverture h de la vanne ; la bobine comprenant un enroulement primaire (25) et deux enroulements secondaires (26), les deux enroulements secondaires (26) étant montés en série de façon coaxiale.

19. Dispositif selon la revendication 18, **caractérisé en ce que** le noyau en ferrite (20) est positionné à l'intérieur de la bobine (33) en fonction du mouvement de commande pour l'ouverture h de la vanne.

20. Dispositif selon l'une des revendications 18 ou 19, **caractérisé en ce que** les deux enroulements secondaires (26) sont montés en opposition, si bien que lorsque le noyau en ferrite (20) se trouve dans une position symétrique par rapport aux deux enroulements secondaires (26), l'induction est supprimée.

21. Dispositif selon la revendication 16, **caractérisé en ce que** le capteur de course (111) contient une photodiode (21), un écran de recouvrement (23) mobile accouplé à la broche (16) de la vanne ainsi que des moyens captant les rayons lumineux émis par la photodiode (21).

22. Dispositif selon la revendication 21, **caractérisé en ce que** l'écran de recouvrement (23) est disposé au bout de la broche (16) prolongée de la vanne et qu'il coopère avec un diaphragme à fente (24).

23. Dispositif selon l'une ou plusieurs de revendications 21 ou 22, **caractérisé en ce que** l'écran de recouvrement (23) est conçu avec une symétrie de révolution.

24. Dispositif selon l'une ou plusieurs des revendications 21 à 23, **caractérisé en ce que** la génératrice de l'écran de recouvrement (23) est conçue de telle manière qu'une linéarisation du courant I, produit par la position de l'écran de recouvrement (23), en fonction de l'ouverture de vanne h est obtenue [fonction I(h)].

25. Dispositif selon l'une ou plusieurs des revendications 21 à 24, **caractérisé en ce qu'**à la place d'une cellule photoélectrique (22) captant les rayons lumineux de la photodiode (21), on a une cellule photoélectrique qui est divisée en un très grand nombre d'éléments photoélectriques individuels minuscules (photobits) qui émettent des signaux numériques directement utilisables.

26. Dispositif selon la revendication 25, **caractérisé en ce que** les photobits sont raccordés au microprocesseur (14) du régulateur de position (6).
